# EUROPEAN PATENT SPECIFICATION

(11) **EP 4 253 145 B1**
(45) Date of publication and mention of the grant of the patent: **06.08.2025**
(21) Application number: 23160634.4
(22) Date of filing: 08.03.2023
(51) Int. Cl.: B60N 2/56

(54) **A SYSTEM TO CONTROL TEMPERATURE OF A SEAT IN AN AUTOMOBILE**
SYSTEM ZUR STEUERUNG DER TEMPERATUR EINES SITZES IN EINEM AUTOMOBIL
SYSTÈME DE RÉGULATION DE LA TEMPÉRATURE D'UN SIÈGE DE VÉHICULE AUTOMOBILE

(30) Priority: 29.03.2022 IN 202241018471
(43) Date of publication of application: 04.10.2023
(73) Proprietor: TVS Motor Company Limited, 600006 Chennai (IN)
(72) Inventor: Prasad, Ragavendra, 600 006 Chennai (IN); Ravikumar, Prashanth Kumar, 600 006 Chennai (IN); Vaishali, Ramanathan, 600 006 Chennai (IN)
(74) Representative: Patentanwaltskanzlei Matschnig & Forsthuber OG

(56) References cited:
- DE-A1- 4 318 432
- US-A1- 2010 130 808
- US-A1- 2020 093 635

## Description

### FIELD OF THE INVENTION

The present invention generally relates to a system to control temperature of a seat in an automobile.

### BACKGROUND OF THE INVENTION

In any mode of transportation today, be it through land, air or water, a commonality between all of them is that all occupants are seated on a seat while travelling. During long journeys, there are provisions for vehicle occupants to recline or lie down in some modes of transport. However, most automobiles, such provisions are either absent or impossible to implement. For instance, a motorcycle rider riding long distances do not have the provision for reclining. In another scenario, a taxi driver or a truck driver would have to sit throughout his working hours seated at the same place. Due to sitting for long hours, riders of such vehicles experience fatigue and pain in their muscles thereby, amounting to a very uncomfortable travel. US 2020/093635 A1, DE 43 18 432 A1 and US 2010/130808 A1 show examples of the prior art.

Existing solutions provide for increasing or decreasing temperature of the seat by means of manually operated switches. However, it is quite irritable to a rider to constantly switch ON and OFF switches while travelling long distances. Further, addition of such switches requires additional costs pertaining to tooling and installation. A rider might get distracted with the switches and fail to keep an eye on the road ahead that may cause accidents.

Thus, there is a need in the art for a system to control temperature of a seat in an automobile which can address at least the aforementioned problems and limitations.

### SUMMARY OF THE INVENTION

In one aspect, the present invention is directed to automatically control temperature of a seat in an automobile. The system comprises one or more sensors, one or more control units and a thermoelectric module. The one or more control units are configured to determine an optimum seat temperature value based on a plurality of parameters obtained from the one or more sensors. The optimum seat temperature value is a desired temperature to increase comfort for a seat occupant. The thermoelectric module is in communication with the control unit and is configured to adjust temperature of the seat wherein the one or more control units controls the thermoelectric module to reach the optimum seat temperature value thereby increasing comfort for the seat occupant.

In an embodiment, the one or more control units include a first control unit configured to determine the optimum seat temperature value and receive a battery state of charge value from one or more batteries; and a second control unit in communication with the first control unit, the second control unit receives the optimum seat temperature value from the first control unit and controls the thermoelectric module to reach the optimum seat temperature value.

**In** an embodiment, the one or more control units are configured to control the thermoelectric module to cease operation in an event when a battery state of charge is lower than a minimum threshold battery state of charge and a battery rate of discharge is greater than a maximum battery rate of discharge.

**In** an embodiment, the first control unit is configured to receive the battery state of charge value from one or more batteries.

**In** an embodiment, the system includes a third control unit configured to receive the battery state of charge value from one or more batteries.

In an embodiment, the first control unit and the second control unit communicate over a Controller Area Network (CAN) or a Local Interconnect Network (LIN).

In an embodiment, the thermoelectric module includes a diagnosis unit configured to notify the seat occupant in an event when a fault is detected.

In an embodiment, the first control unit is provided in an instrument cluster of the automobile.

In an embodiment, the first control unit is disposed subjacent to the seat in the automobile.

According to the invention, the plurality of parameters comprises one or more riding parameters, one or more automobile parameters and one or more ambient parameters.

In an embodiment, the one or more control units are configured to control the thermoelectric module to increase the temperature of the seat in an event when the seat occupant has been occupying the seat for a duration greater than a predetermined riding threshold duration and an automobile speed is greater than an automobile threshold speed.

In an embodiment, the one or more control units are configured to control the thermoelectric module to increase the temperature of the seat in an event when at least one of a frequency of application of brakes is greater than a first threshold frequency of application of brakes and a frequency of switching between an application of brakes and an application of a throttle is greater than a second threshold frequency.

In an embodiment, the one or more control units are configured to control the thermoelectric module to decrease the temperature of the seat in an event when a time period after automobile starts is lower than a first time period threshold after automobile starts and an ambient temperature is greater than a maximum limit of seat temperature.

In an embodiment, the one or more control units are configured to control the thermoelectric module to increase the temperature of the seat in an event when a time period after automobile starts is lower than a first time period threshold after automobile starts and an ambient temperature is lower than a minimum limit of seat temperature.

In an embodiment, the one or more control units are configured to control the thermoelectric module to increase the temperature of the seat in an event when a speed of the automobile is changing consistently over a predetermined period of time.

In another aspect, the present invention is directed to a method to control temperature of a seat in an automobile. The method includes the steps of receiving, by control units, a plurality of parameters from one or more sensors. Thereafter, the method includes the step of determining, by a the one or more control units, an optimum seat temperature value based on a plurality of parameters obtained from the one or more sensors. Thereafter, the method includes the step of adjusting, by a thermoelectric module, temperature of the seat to reach the optimum seat temperature value, thereby, increasing comfort for a seat occupant.

In an embodiment, the method includes the steps of notifying the seat occupant, by a diagnosis unit, in an event when the thermoelectric module has a fault. The diagnosis unit is provided in the thermoelectric module.

In an embodiment, the method includes the steps of determining if the seat occupant is occupying a seat for a duration greater than a predetermined riding threshold duration. Thereafter, the method includes the step of determining if speed of the automobile is greater than an automobile threshold speed. Thereafter, the method includes the step of increasing temperature of the seat to the optimum seat temperature value.

In an embodiment, the method includes the steps of determining if a frequency of application of brakes is greater than a first threshold frequency of application of brakes. Thereafter, the method includes the step of determining if a frequency of switching between application of brakes and application of throttle is greater than a second threshold frequency. Thereafter, the method includes the step of increasing temperature of the seat to the optimum seat temperature value if the frequency of application of brakes is greater than the first threshold frequency and/or the frequency of switching between the application of brakes and the application of the throttle is greater than the second threshold frequency.

In an embodiment, the method includes the steps of determining if a time period after automobile starts is lower than a first time period threshold. Thereafter, the method includes the step of determining if ambient temperature is greater than a maximum limit of seat temperature. Thereafter, the method includes the step of decreasing temperature of the seat to the optimum seat temperature value.

In an embodiment, the method includes the steps of determining if a time period after automobile starts is lower than a first time period threshold. Thereafter, the method includes the step of determining if ambient temperature is lower than a minimum limit of seat temperature. Thereafter, the method includes the step of increasing temperature of the seat to the optimum seat temperature value.

In an embodiment, the method includes the steps of determining if an automobile speed is changing consistently over a predetermined period of time. Thereafter, the method includes the step of increasing temperature of the seat to the optimum seat temperature value.

In an embodiment, the method includes the steps of determining if a battery state of charge is lower than a minimum threshold battery state of charge. Thereafter, the method includes determining if a battery rate of discharge is greater than a maximum battery rate of discharge. Thereafter, the method includes the step of ceasing operation of the thermoelectric module to preserve the charge of a battery.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 illustrates a system to control temperature of a seat in an automobile, in accordance with an embodiment of the present invention.
Figures 2 to 8 illustrate a method to control temperature of a seat in an automobile, in accordance with an embodiment of the invention.

### DETAILED DESCRIPTION OF THE INVENTION

Various features and embodiments of the present invention here will be discernible from the following further description thereof, set out hereunder.

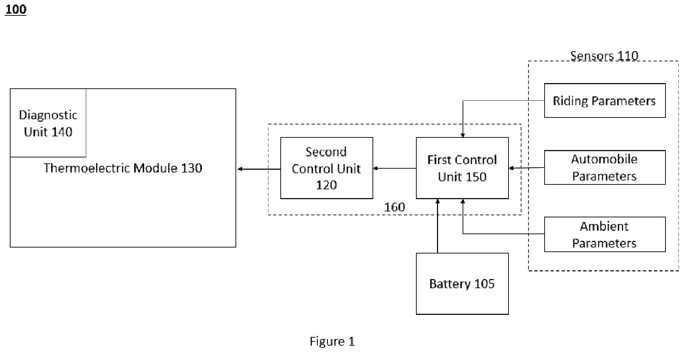

Figure 1 illustrates a system 100 to control temperature of a seat (not shown) in an automobile. The expression 'automobile' is used henceforth in the description for referring to any vehicle, wherein the vehicle can traverse through land, air, water, underwater or space, and can be propelled by any motive means known, without defeating the scope of the present invention. The system 100 includes sensors 110 disposed in the automobile. The sensors 110 are configured to sense primarily three different kinds of parameters i.e., riding parameters, automobile parameters and ambient parameters.

The automobile parameters include speed of the automobile, state of charge and rate of discharge of batteries 105 in the automobile. In an embodiment, the speed of the automobile is determined by a speed sensor disposed on a wheel of the automobile. In an embodiment, the state of charge and the rate of discharge of batteries 105 is determined by a battery management system (BMS) (not shown) provided in the batteries 105.

The ambient parameters include ambient temperature and temperature at a rider and seat interface. In an embodiment, the ambient temperature is determined by a temperature sensor. In an embodiment, the temperature sensor may be placed inside an instrument cluster (not shown) of the automobile. In an embodiment, the temperature at the rider and seat interface is determined by a seat micro-climate sensor.

The riding parameters include riding time of the automobile during which a rider has been occupying the seat, frequency of application of brakes, frequency of switching between application of brakes and application of throttle and time period elapsed after the automobile has started.

The sensors 110 are configured to send the riding parameters, automobile parameters and ambient parameters to a first control unit 150. The first control unit 150 is a part of one or more control units 160. The first control unit 150 is configured to determine an optimum seat temperature value based on the plurality of parameters obtained from the sensors 110. The optimum seat temperature value is a desired temperature that increases comfort for a seat occupant. In an embodiment, the first control unit 150 is further configured to receive a battery state of charge value form the batteries 105. In yet another embodiment, a third control unit (not shown) is configured to receive the battery state of charge value from the batteries 105. In an embodiment, the first control unit 150 is provided in the instrument cluster (not shown) of the automobile. In another embodiment, the first control unit 150 is disposed subjacent to the seat in the automobile.

The system 100 further includes a thermoelectric module 130. The thermoelectric module 130 comprises a thermoelectric element that can increase or decrease temperature based on a change in applied voltage across a junction of the thermoelectric element based on a phenomenon known as Peltier Effect. In an embodiment, the thermoelectric module 130 further includes a diagnosis unit 140 configured to notify the seat occupant in an event when a fault is detected. The fault includes failure to reach the optimum seat temperature value due to overheating or overcooling. The fault also includes being entirely unable to be functional on application of a voltage level. In an embodiment, the seat occupant is notified of the fault through a display unit (not shown) in the instrument cluster. In an embodiment, the thermoelectric module 130 is disposed subjacent to the seat of the automobile. When temperature of the thermoelectric module 130 increases or decreases, the temperature is transferred to the seat as a result of thermal conduction. The thermoelectric module 130 is configured to reach optimum seat temperature value by being controlled by the control units 160.

In an embodiment, a second control unit 120 is provided which is in communication with the first control unit 150. The second control unit 150 receives the optimum seat temperature value from the first control unit 150 and controls the thermoelectric module 130 to reach the optimum seat temperature value. In an embodiment, the first control unit 150 and the second control unit 120 communicates over a Controller Area Network (CAN) or a Local Interconnect Network (LIN).

In an embodiment, the second control unit 120 is configured to control the thermoelectric module 130 to increase the temperature of the seat when the seat occupant has been occupying the seat for a duration greater than a predetermined riding threshold duration and an automobile speed is greater than an automobile threshold speed. As an example, the predetermined riding threshold duration is 4 hours, and the automobile threshold speed is 80 km per hour. When the seat occupant has been seated in their seat for greater than 4 hours and the vehicle has exceeded the speed of 80 km per hour, the seat occupant would be fatigued due to sitting at the same place for a significant duration and at a high speed, has experienced mechanical vibrations of the automobile all the while. Thus, the system 100 increases the temperature of the seat to provide comfort to muscles of the seat occupant.

In an embodiment, the second control unit 160 is configured to control the thermoelectric module 130 to increase the temperature of the seat when at least one of a frequency of application of brakes is greater than a threshold frequency of application of brakes and a frequency of switching between an application of brakes and application of throttle is greater than a threshold frequency. As an example, the threshold frequency of application of brakes is 100 times in 30 minutes and the threshold frequency of switching between an application of brakes and an application of throttle is 80 times in 30 minutes. When the rider applies brakes so frequently, the rider and the seat occupants in the vehicle are experiencing a very difficult and uncomfortable ride as they are being subjected to inertial forces every time the automobile is braked. Therefore, the system 100 increases the temperature of the seat to provide comfort to muscles of the seat occupant.

In an embodiment, the second control unit 160 is configured to control the thermoelectric module 130 to decrease the temperature of the seat when a time period after automobile has started is lower than a first time period threshold after automobile has started and an ambient temperature is greater than a maximum limit of seat temperature. As an example, the first time period threshold after automobile has started is 15 minutes and the maximum limit of seat temperature is 45°C. Therefore, while the seat occupant occupies the seat in the first 15 minutes, they would be subjected to very high temperatures that can be quite uncomfortable. Therefore, the system 100 decreases the temperature of the seat to provide comfort to muscles of the seat occupant and prevent the muscles from inflammation due to high temperature.

In an embodiment, the second control unit 160 is configured to control the thermoelectric module 130 to increase the temperature of the seat when a time period after automobile has started is lower than a first time period threshold after automobile has started and an ambient temperature is lesser than a minimum limit of seat temperature. As an example, the first time period threshold after automobile has started is 15 minutes and the minimum limit of seat temperature is 15°C. Therefore, while the seat occupant occupies the seat in the first 15 minutes, they would be subjected to very low temperatures that can be quite uncomfortable. Therefore, the system 100 increases the temperature of the seat to provide comfort to muscles of the seat occupant and prevent the muscles from getting numb due to low temperature.

In an embodiment, the second control unit 160 is configured to control the thermoelectric module 130 to increase the temperature of the seat when a speed of the automobile is changing consistently over a predetermined period of time. As an example, the speed of the automobile has changed by a range of 30 percentage over 10 minutes. This would indicate that the rider is facing several road anomalies such as bumps, potholes or diversions ahead of them or is stuck in traffic thereby, resulting in an uncomfortable riding experience. Therefore, the system 100 increases the temperature of the seat to provide comfort to muscles of the seat occupant.

In an embodiment, the control unit 160 is configured to control the thermoelectric module 130 to cease operation in an event when a battery state of charge is lower than a minimum threshold battery state of charge and a battery rate of discharge is greater than a maximum battery rate of discharge. The system 100 does so to conserve charge in the batteries 105 and prioritize other functions such as driving a power unit or essential, primary functions of the automobile.

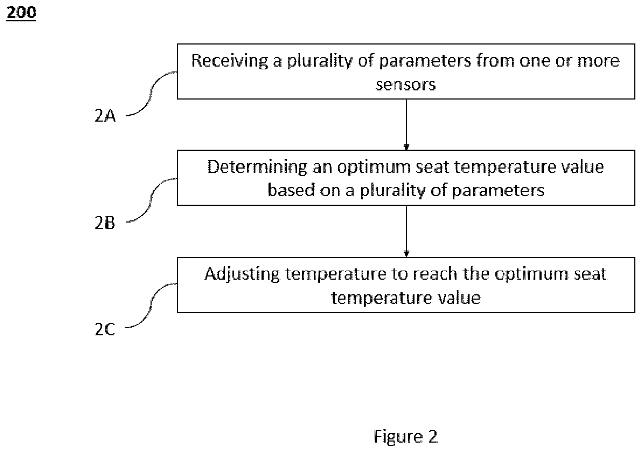

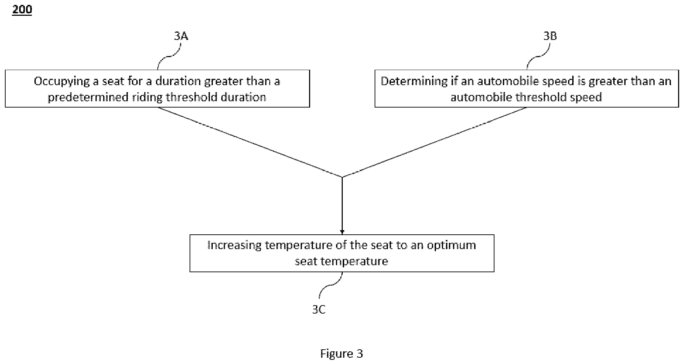

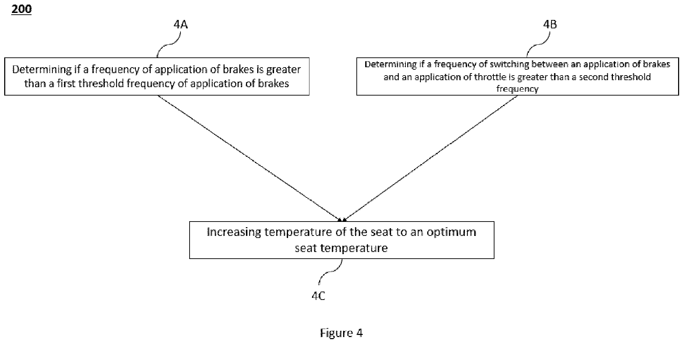

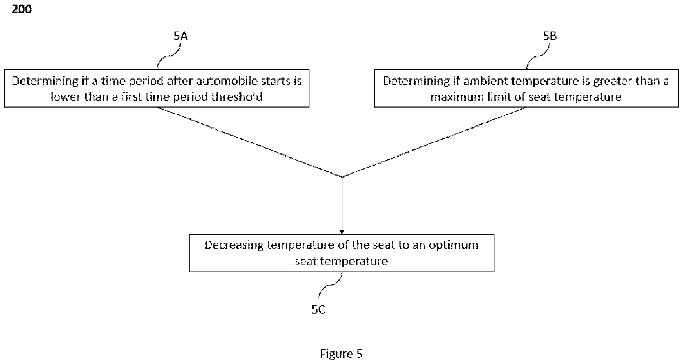

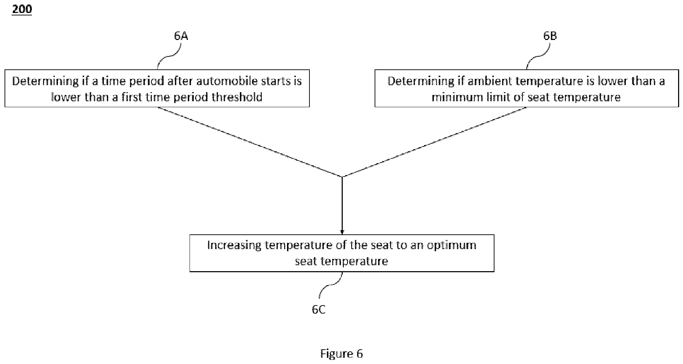

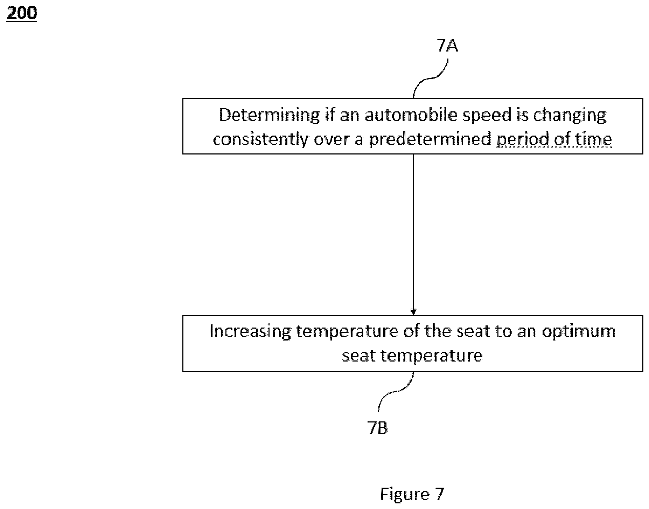

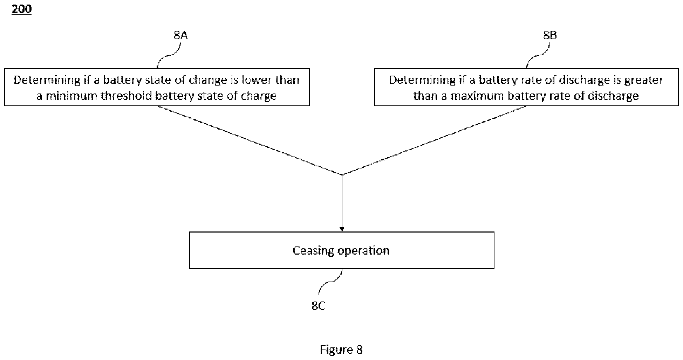

Figures 2 to 8 illustrate a method 200 to control temperature of a seat in an automobile, in accordance with an embodiment of the invention. The method 200 includes the steps of receiving 2A, by the control units 160, a plurality of parameters from one or more sensors 110. Thereafter, the method 200 includes the step of determining 2B, by a the one or more control units 160, an optimum seat temperature value based on a plurality of parameters obtained from the one or more sensors 110. Thereafter, the method 200 includes the step of automatically adjusting 2C, by a thermoelectric module 130, temperature of the seat to reach the optimum seat temperature value, thereby, increasing comfort for a seat occupant.

In an embodiment, the method 200 includes the step of notifying the seat occupant, by a diagnosis unit 140, in an event when the thermoelectric module 130 has a fault. The diagnosis unit 140 is provided in the thermoelectric module 130.

In an embodiment, the method 200 includes the step of determining 3A if the seat occupant is occupying a seat for a duration greater than a predetermined riding threshold duration. Thereafter, the method 200 includes the step of determining 3B if speed of the automobile is greater than an automobile threshold speed. Thereafter, the method 200 includes the step of increasing 3C temperature of the seat to the optimum seat temperature value.

In an embodiment, the method 200 includes the step of determining 4A if a frequency of application of brakes is greater than a first threshold frequency of application of brakes. Thereafter, the method 200 includes the step of determining 4B if a frequency of switching between an application of brakes and an application of throttle is greater than a second threshold frequency. Thereafter, the method 200 includes the step of increasing 4C temperature of the seat to the optimum seat temperature value in case either of conditions enumerated in step 4A and step 4B are met.

In an embodiment, the method 200 includes the step of determining 5A if a time period after automobile starts is lower than a first time period threshold. Thereafter, the method 200 includes the step of determining 5B if ambient temperature is greater than a maximum limit of seat temperature. Thereafter, the method 200 includes the step of decreasing 5C temperature of the seat to the optimum seat temperature value.

In an embodiment, the method 200 includes the step of determining 6A if a time period after automobile starts is lower than a first time period threshold. Thereafter, the method 200 includes the step of determining 6B if ambient temperature is lower than a minimum limit of seat temperature. Thereafter, the method 200 includes the step of increasing 6C temperature of the seat to the optimum seat temperature value.

In an embodiment, the method 200 includes the step of determining 7A if an automobile speed is changing consistently over a predetermined period of time. Thereafter, the method 200 includes the step of increasing 7B temperature of the seat to the optimum seat temperature value.

In an embodiment, the method 200 includes the step of determining 8A if a battery state of charge is lower than a minimum threshold battery state of charge. Thereafter, the method 200 includes determining 8B if a battery rate of discharge is greater than a maximum battery rate of discharge. Thereafter, the method includes the step of ceasing 8C operation of the thermoelectric module 130 to preserve the charge of a battery 105.

Advantageously, the present invention discloses a system to control temperature of a seat in an automobile. The system includes one or more sensors and one or more control units configured to determine an optimum seat temperature value automatically based on a plurality of parameters obtained from the one or more sensors and further configured to control the thermoelectric module to reach the optimum seat temperature value thereby increasing comfort for the seat occupant. The system reaches the optimum seat temperature without the necessity of mechanical switches that require manual actuation by the rider or seat occupant. Thus, the additional costs and tooling constraints associated with installing additional switches is entirely eliminated thereby, reducing costs of implementing the system. Further, since the system operates in a fire-and-forget principle wherein, no interference from the rider or seat occupant is required, the rider can stay focussed on the road ahead of them.

While the present invention has been described with respect to certain embodiments, it will be apparent to those skilled in the art that various changes and modification may be made without departing from the scope of the invention as defined in the following claims.

## Claims

1. A system (100) to control temperature of a seat in an automobile, the system (100) comprising:
one or more sensors (110); and
one or more control units (160) configured to determine an optimum seat temperature value based on a plurality of parameters obtained from the one or more sensors (110), the optimum seat temperature value being a desired temperature to increase comfort for a seat occupant; and
a thermoelectric module (130) in communication with the control unit (160) configured to adjust temperature of the seat,
wherein,
the plurality of parameters comprising one or more riding parameters, one or more automobile parameters and one or more ambient parameters;
the one or more control units (160) controls the thermoelectric module (130) to reach the optimum seat temperature value thereby increasing comfort for the seat occupant based on determination of the plurality of parameters.

2. The system (100) as claimed in claim 1, wherein the one or more control units (160) comprise: a first control unit (150) configured to determine the optimum seat temperature value; and a second control unit (120) in communication with the first control unit (150), the second control unit (120) receives the optimum seat temperature value from the first control unit (150) and controls the thermoelectric module (130) to reach the optimum seat temperature value.

3. The system (100) as claimed in claim 1, wherein the one or more control units (160) are configured to control the thermoelectric module (130) to cease operation in an event when a battery state of charge is lower than a minimum threshold battery state of charge and a battery rate of discharge is greater than a maximum battery rate of discharge.

4. The system (100) as claimed in claim 2, wherein the first control unit (150) being provided in one of an instrument cluster of the automobile and the first control unit (150) being disposed subjacent to the seat in the automobile.

5. The system (100) as claimed in claim 1, wherein the one or more control units (160) are configured to control the thermoelectric module (130) to increase the temperature of the seat after determination and of the one or more riding parameters, wherein the one or more riding parameters including an event when the seat occupant has been occupying the seat for a duration greater than a predetermined riding threshold duration and an automobile speed is greater than an automobile threshold speed.

6. The system (100) as claimed in claim 1, wherein the one or more control units (160) are configured to control the thermoelectric module (130) to increase the temperature of the seat after determination and of the one or more riding parameters, wherein the one or more riding parameters including an event at least one of: when a frequency of application of brakes is greater than a first threshold frequency of application of brakes and a frequency of switching between the application of the brakes and an application of a throttle is greater than a second threshold frequency.

7. The system (100) as claimed in claim 1, wherein the one or more control units (160) are configured to control the thermoelectric module (130) to decrease the temperature of the seat after determination and of the one or more ambient parameters, wherein the one or more ambient parameters including an event when a time period after automobile starts is lower than a first time period threshold after automobile starts and an ambient temperature is greater than a maximum limit of seat temperature.

8. The system (100) as claimed in claim 1, wherein the one or more control units (160) are configured to control the thermoelectric module (130) to increase the temperature of the seat after determination and of the one or more ambient parameters, wherein the one or more ambient parameters including an event at least one of: when a time period after automobile starts is lower than a first time period threshold after automobile starts and an ambient temperature is lower than a minimum limit of seat temperature; when a speed of the automobile is changing consistently over a predetermined period of time.

9. A method (200) to control temperature of a seat in an automobile, the method (200) comprising the steps of:
receiving (2A), by one or more control units (160), a plurality of parameters from one or more sensors (110);
determining (2B), by the one or more control units (160), an optimum seat temperature value based on a plurality of parameters obtained from the one or more sensors (110), wherein the plurality of parameters comprising one or more riding parameters, one or more automobile parameters and one or more ambient parameters; and
adjusting (2C), by a thermoelectric module (130), temperature of the seat to reach the optimum seat temperature value, thereby, increasing comfort for a seat occupant based on determination of the plurality of parameters by the one or more control units (160).

10. The method (200) as claimed in claim 9, comprising the steps of:
determining (3A) the one or more riding parameters, wherein the one or more riding parameters including if the seat occupant is occupying a seat for a duration greater than a predetermined riding threshold duration;
determining (3B) if speed of the automobile is greater than an automobile threshold speed; and
increasing (3C), temperature of the seat to the optimum seat temperature value.

11. The method (200) as claimed in claim 9, comprising the steps of:
determining (4A) the one or more riding parameters, wherein the one or more riding parameters including if a frequency of application of brakes is greater than a first threshold frequency of application of brakes;
determining (4B) if a frequency of switching between the application of brakes and an application of a throttle is greater than a second threshold frequency; and
increasing (4C) temperature of the seat to the optimum seat temperature value if the frequency of application of brakes is greater than the first threshold frequency and/or the frequency of switching between the application of brakes and the application of the throttle is greater than the second threshold frequency.

12. The method (200) as claimed in claim 9, comprising the steps of:
determining (5A) the one or more ambient parameters, wherein the one or more ambient parameters including if a time period after automobile starts is lower than a first time period threshold;
determining (5B) if ambient temperature is greater than a maximum limit of seat temperature; and
decreasing (5C), temperature of the seat to the optimum seat temperature value.

13. The method (200) as claimed in claim 9, comprising the steps of:
determining (6A) the one or more riding parameters, wherein the one or more riding parameters including if a time period after automobile starts is lower than a first time period threshold;
determining (6B) the one or more ambient parameters, wherein the one or more ambient parameters including if ambient temperature is lower than a minimum limit of seat temperature; and
increasing (6C), temperature of the seat to the optimum seat temperature value.

14. The method (200) as claimed in claim 9, comprising the steps of:
determining (7A) the one or more automobile parameters, wherein the one or more automobile parameters including if an automobile speed is changing consistently over a predetermined period of time; and
increasing (7B), temperature of the seat to the optimum seat temperature value.

15. The method (200) as claimed in claim 9, comprising the steps of:
determining (8A) the one or more automobile parameters, wherein the one or more automobile parameters including a battery state of charge is lower than a minimum threshold battery state of charge;
determining (8B) if a battery rate of discharge is greater than a maximum battery rate of discharge; and
ceasing (8C) operation of the thermoelectric module (130) to preserve the charge of a battery (105).

## Patentansprüche

1. System (100) zum Steuern der Temperatur eines Sitzes in einem Kraftfahrzeug, wobei das System (100) aufweist:
einen oder mehrere Sensoren (110); und
eine oder mehrere Steuereinheiten (160), dazu eingerichtet, einen optimalen Wert der Sitztemperatur aufgrund einer Vielzahl von Parametern zu bestimmen, die von dem bzw. den Sensoren (110) erhalten werden, wobei der optimale Wert der Sitztemperatur eine gewünschte Temperatur zum Verbessern des Wohlbefindens für einen Sitznutzer ist; und
ein thermoelektrisches Modul (130) in Kommunikationsverbindung mit der Steuereinheit (160), dazu eingerichtet, die Temperatur des Sitzes einzustellen,
wobei
die Vielzahl von Parametern einen oder mehrere Fahrparameter, einen oder mehrere Kraftfahrzeugparameter und einen oder mehrere Umgebungsparameter aufweist;
die eine bzw. mehreren Steuereinheiten (160) das thermoelektrische Modul (130) steuert / steuern, um den optimalen Wert der Sitztemperatur zu erreichen und dadurch das Wohlbefinden für den Sitzbenutzer aufgrund des Bestimmens der Vielzahl von Parametern zu erhöhen.

2. System (100) nach Anspruch 1, wobei die eine bzw. mehreren Steuereinheiten (160) aufweisen: eine erste Steuereinheit (150), die dazu eingerichtet ist, den optimalen Wert der Sitztemperatur zu bestimmen; und eine zweite Steuereinheit (120) in Kommunikationsverbindung mit der ersten Steuereinheit (150), wobei die zweite Steuereinheit (120) den optimalen Wert der Sitztemperatur von der ersten Steuereinheit (150) empfängt und das thermoelektrische Modul (130) zum Erreichen des optimalen Werts der Sitztemperatur steuert.

3. System (100) nach Anspruch 1, wobei die eine bzw. mehreren Steuereinheiten (160) dazu eingerichtet ist / sind, das thermoelektrische Modul (130) zum Einstellen seines Betriebs zu steuern, wenn ein Batterieladezustand niedriger ist als ein minimaler Schwellenwert des Batterieladezustands und eine Entladerate der Batterie größer ist als eine maximale Batterieentladerate.

4. System (100) nach Anspruch 2, wobei die erste Steuereinheit (150) in einem Kombi-Instrument des Kraftfahrzeugs vorgesehen ist und die erste Steuereinheit (150) unterhalb des Sitzes in dem Kraftfahrzeug angeordnet ist.

5. System (100) nach Anspruch 1, wobei die eine bzw. mehreren Steuereinheiten (160) dazu eingerichtet sind, das thermoelektrische Modul (130) zum Erhöhen der Temperatur des Sitzes nach dem Bestimmen des bzw. der Fahrparameter zu steuern, wobei der bzw. die Fahrparameter ein Ereignis, wenn der Sitznutzer den Sitz für eine Dauer eingenommen hat, die größer ist als ein vorbestimmter Schwellenwert der Fahrdauer, und eine Fahrzeuggeschwindigkeit größer ist als ein Schwellenwert der Fahrzeuggeschwindigkeit, einschließen.

6. System (100) nach Anspruch 1, wobei die eine bzw. mehreren Steuereinheiten (160) dazu eingerichtet sind, das thermoelektrische Modul (130) zum Erhöhen der Temperatur des Sitzes nach dem Bestimmen des bzw. der Fahrparameter zu steuern, wobei der bzw. die Fahrparameter zumindest ein Ereignis einschließen von: wenn eine Häufigkeit der Betätigung der Bremsen größer ist als eine erster Schwellenwert der Häufigkeit der Bremsbetätigung und eine Häufigkeit des Umschaltens zwischen der Betätigung der Bremsen und der Betätigung eines Gaspedals größer ist als eine zweiter Schwellenwert der Häufigkeit.

7. System (100) nach Anspruch 1, wobei die eine bzw. mehreren Steuereinheiten (160) dazu eingerichtet sind, das thermoelektrische Modul (130) zum Absenken der Temperatur des Sitzes nach dem Bestimmen des bzw. der Fahrparameter zu steuern, wobei der bzw. die Fahrparameter ein Ereignis, wenn eine Zeitdauer nach dem Starten des Kraftfahrzeugs kleiner ist als ein erster Schwellenwert der Zeitdauer nach dem Starten des Kraftfahrzeugs und eine Umgebungstemperatur größer ist als eine Höchstgrenze der Sitztemperatur, einschließen.

8. System (100) nach Anspruch 1, wobei die eine bzw. mehreren Steuereinheiten (160) dazu eingerichtet sind, das thermoelektrische Modul (130) zum Erhöhen der Temperatur des Sitzes nach dem Bestimmen des bzw. der Fahrparameter zu steuern, wobei der bzw. die Fahrparameter zumindest ein Ereignis einschließen von: wenn eine Zeitdauer nach dem Starten des Kraftfahrzeugs kleiner ist als ein erster Schwellenwert der Zeitdauer nach dem Starten des Kraftfahrzeugs und eine Umgebungstemperatur niedriger ist als eine Mindestgrenze der Sitztemperatur; wenn sich eine Geschwindigkeit des Kraftfahrzeugs über eine vorbestimmte Zeitdauer hinweg konsistent ändert.

9. Verfahren (200) zum Steuern der Temperatur eines Sitzes in einem Kraftfahrzeug, wobei das Verfahren (200) folgende Schritte umfasst:
Empfangen (2A) einer Vielzahl von Parametern von einem oder mehreren Sensoren (110) durch eine oder mehrere Steuereinheiten (160);
Bestimmen (2B) eines optimalen Wert der Sitztemperatur aufgrund einer Vielzahl von Parametern, die von dem bzw. den Sensoren (110) erhalten werden, durch die eine bzw. mehreren Steuereinheiten (160), wobei die Vielzahl von Parametern einen oder mehrere Fahrparameter, einen oder mehrere Kraftfahrzeugparameter und einen oder mehrere Umgebungsparameter aufweist; und
Einstellen (2C) der Temperatur des Sitzes durch ein thermoelektrisches Modul (130) zum Erreichen des optimalen Werts der Sitztemperatur, wodurch das Wohlbefinden für einen Sitzbenutzer aufgrund des Bestimmens der Vielzahl von Parametern durch die eine bzw. mehreren Steuereinheiten (160) erhöht wird.

10. Verfahren (200) nach Anspruch 9, umfassend die Schritte:
Bestimmen (3A) des bzw. der Fahrparameter, wobei der bzw. die Fahrparameter einschließen, ob der Sitzbenutzer einen Sitz für eine Dauer einnimmt, die größer ist als ein vorbestimmter Schwellenwert der Fahrdauer;
Bestimmen (3B), ob die Geschwindigkeit des Kraftfahrzeugs größer ist als ein Schwellenwert der Kraftfahrzeuggeschwindigkeit; und
Erhöhen (3C) der Temperatur des Sitzes auf den optimalen Wert der Sitztemperatur.

11. Verfahren (200) nach Anspruch 9, umfassend die Schritte:
Bestimmen (4A) des bzw. der Fahrparameter, wobei der bzw. die Fahrparameter einschließen, ob eine Häufigkeit der Betätigung der Bremsen größer ist als ein erster Schwellenwert der Häufigkeit der Bremsbetätigung;
Bestimmen (4B), ob eine Häufigkeit des Umschaltens zwischen der Betätigung der Bremsen und der Betätigung eines Gaspedals größer ist als eine zweiter Schwellenwert der Häufigkeit; und
Erhöhen (4C) der Temperatur des Sitzes auf den optimalen Wert der Sitztemperatur, wenn die Häufigkeit der Betätigung der Bremsen größer ist als der erste Schwellenwert und/oder die Häufigkeit des Umschaltens zwischen der Betätigung der Bremsen und der Betätigung des Gaspedals größer ist als der zweite Schwellenwert.

12. Verfahren (200) nach Anspruch 9, umfassend die Schritte:
Bestimmen (5A) des bzw. der Umgebungsparameter, wobei der bzw. die Umgebungsparameter einschließen, ob eine Zeitdauer nach dem Starten des Kraftfahrzeugs niedriger ist als ein erster Schwellenwert der Zeitdauer;
Bestimmen (5B), ob die Umgebungstemperatur größer ist als eine Höchstgrenze der Sitztemperatur; und
Verringern (5C) der Temperatur des Sitzes auf den optimalen Wert der Sitztemperatur.

13. Verfahren (200) nach Anspruch 9, umfassend die Schritte:
Bestimmen (6A) des bzw. der Fahrparameter, wobei der bzw. die Fahrparameter einschließen, ob eine Zeitdauer nach dem Starten des Kraftfahrzeugs niedriger ist als ein erster Schwellenwert der Zeitdauer;
Bestimmen (6B) des bzw. der Umgebungsparameter, wobei der bzw. die Umgebungsparameter einschließen, ob die Umgebungstemperatur niedriger ist als eine Mindestgrenze der Sitztemperatur; und
Erhöhen (6C) der Temperatur des Sitzes auf den optimalen Wert der Sitztemperatur.

14. Verfahren (200) nach Anspruch 9, umfassend die Schritte:
Bestimmen (7A) des bzw. der Kraftfahrzeugparameter, wobei der bzw. die Kraftfahrzeugparameter einschließen, ob sich eine Fahrzeuggeschwindigkeit über eine vorbestimmte Zeitdauer hinweg konsistent ändert; und
Erhöhen (7B) der Temperatur des Sitzes auf den optimalen Wert der Sitztemperatur.

15. Verfahren (200) nach Anspruch 9, umfassend die Schritte:
Bestimmen (8A) des bzw. der Kraftfahrzeugparameter, wobei der bzw. die Kraftfahrzeugparameter einschließen, ob ein Batterieladezustand niedriger ist als ein minimaler Schwellenwert des Batterieladezustands;
Bestimmen (8B), ob eine Entladerate der Batterie größer ist als eine maximale Batterieentladerate; und
Beenden (8C) des Betriebs des thermoelektrischen Moduls (130), um die Batterieladung (105) zu wahren.

## Revendications

1. Système (100) pour contrôler la température d'un siège dans une automobile, le système (100) comprenant :
un ou plusieurs capteurs (110) ; et
une ou plusieurs unités de contrôle (160) configurées pour déterminer une valeur optimale de température du siège basée sur une pluralité de paramètres obtenus à partir d'un ou plusieurs capteurs (110), la valeur optimale de température du siège étant une température souhaitée pour augmenter le confort d'un occupant du siège ; et
un module thermoélectrique (130) en communication avec l'unité de contrôle (160) configuré pour ajuster la température du siège,
dans lequel
la pluralité de paramètres comprennent un ou plusieurs paramètres de conduite, un ou plusieurs paramètres automobiles et un ou plusieurs paramètres ambiants ;
ladite ou lesdites unités de contrôle (160) commandant le module thermoélectrique (130) pour atteindre la valeur de température optimale du siège en augmentant ainsi le confort de l'occupant du siège sur la base de la détermination de la pluralité de paramètres.

2. Système (100) selon la revendication 1, dans lequel ladite ou lesdites unités de contrôle (160) comprennent : une première unité de contrôle (150) configurée pour déterminer la valeur de la température optimale du siège ; et une deuxième unité de contrôle (120) en communication avec la première unité de contrôle (150), la deuxième unité de contrôle (120) recevant la valeur de la température optimale du siège de la première unité de contrôle (150) et commandant le module thermoélectrique (130) pour atteindre la valeur de la température optimale du siège.

3. Système (100) selon la revendication 1, dans lequel ladite ou lesdites unités de contrôle (160) sont configurées pour commander le module thermoélectrique (130) afin qu'il cesse de fonctionner lorsqu'un état de charge de la batterie est inférieur à un seuil minimal d'état de charge de la batterie et qu'un taux de décharge de la batterie est supérieur à un taux de décharge maximal de la batterie.

4. Système (100) selon la revendication 2, dans lequel la première unité de contrôle (150) est fournie dans l'un des groupes d'instruments de l'automobile et la première unité de contrôle (150) est disposée sous le siège de l'automobile.

5. Système (100) selon la revendication 1, dans lequel ladite ou lesdites unités de contrôle (160) sont configurées pour commander le module thermoélectrique (130) afin d'augmenter la température du siège après la détermination d'un ou plusieurs paramètres de conduite, ledit ou lesdits paramètres de conduite comportant un événement lorsque l'occupant du siège a occupé le siège pendant une durée supérieure à une durée seuil de conduite prédéterminée et une vitesse de l'automobile est supérieure à une vitesse seuil de l'automobile.

6. Système (100) selon la revendication 1, dans lequel ladite ou lesdites unités de contrôle (160) sont configurées pour commander le module thermoélectrique (130) afin d'augmenter la température du siège après détermination d'un ou plusieurs paramètres de conduite, ledit ou lesdits paramètres de conduite comportant un événement au moins parmi les suivants : lorsqu'une fréquence d'application des freins est supérieure à un premier seuil de fréquence d'application des freins et une fréquence de commutation entre l'application des freins et une application de l'accélérateur est supérieure à un deuxième seuil de fréquence.

7. Système (100) selon la revendication 1, dans lequel ladite ou lesdites unités de contrôle (160) sont configurées pour commander le module thermoélectrique (130) afin de réduire la température du siège après détermination d'un ou plusieurs paramètres ambiants, ledit ou lesdits paramètres ambiants comportant un événement lorsqu'une période de temps après le démarrage de l'automobile est inférieure à un premier seuil de période de temps après le démarrage de l'automobile et une température ambiante est supérieure à une limite maximale de la température du siège.

8. Système (100) selon la revendication 1, dans lequel ladite ou lesdites unités de contrôle (160) sont configurées pour commander le module thermoélectrique (130) afin d'augmenter la température du siège après détermination d'un ou plusieurs paramètres ambiants, ledit ou lesdits paramètres ambiants comportant un événement parmi les suivants : lorsqu'une période de temps après le démarrage de l'automobile est inférieure à un premier seuil de période de temps après le démarrage de l'automobile et qu'une température ambiante est inférieure à la limite minimale de la température du siège ; lorsqu'une vitesse de l'automobile change de façon consistante sur une période de temps prédéterminée.

9. Procédé (200) pour contrôler la température d'un siège dans une automobile, le procédé (200) comprenant les étapes de :
recevoir (2A), par ladite ou lesdites unités de contrôle (160), une pluralité de paramètres provenant d'un ou plusieurs capteurs (110) ;
déterminer (2B), par ladite ou lesdites unités de contrôle (160), une valeur optimale de température du siège basée sur une pluralité de paramètres obtenus à partir d'un ou plusieurs capteurs (110), la pluralité de paramètres comportant un ou plusieurs paramètres de conduite, un ou plusieurs paramètres de l'automobile et un ou plusieurs paramètres de l'environnement ; et
ajuster (2C), par un module thermoélectrique (130), la température du siège pour atteindre la valeur de température optimale du siège, en augmentant ainsi le confort de l'occupant du siège sur la base de la détermination de la pluralité de paramètres par ladite ou lesdites unités de contrôle (160).

10. Procédé (200) selon la revendication 9, comprenant les étapes de :
déterminer (3A) un ou plusieurs paramètres de conduite, ledit ou lesdits paramètres de conduite incluant si l'occupant du siège occupe un siège pendant une durée supérieure à une durée seuil de conduite prédéterminée ;
déterminer (3B) si la vitesse de l'automobile est supérieure à une vitesse seuil de l'automobile ; et
augmenter (3C), la température du siège jusqu'à la valeur de température optimale du siège.

11. Procédé (200) selon la revendication 9, comprenant les étapes de :
déterminer (4A) un ou plusieurs paramètres de conduite, ledit ou lesdits paramètres de conduite incluant si une fréquence d'application des freins est supérieure à un premier seuil de fréquence d'application des freins ;
déterminer (4B) si une fréquence de commutation entre l'application des freins et l'application d'un accélérateur est supérieure à un deuxième seuil de fréquence ; et
augmenter (4C) la température du siège à la valeur optimale de température du siège si la fréquence d'application des freins est supérieure au premier seuil de fréquence et/ou la fréquence de commutation entre l'application des freins et l'application de l'accélérateur est supérieure au deuxième seuil de fréquence.

12. Procédé (200) selon la revendication 9, comprenant les étapes de :
déterminer (5A) un ou plusieurs paramètres ambiants, ledit ou lesdits paramètres ambiants incluant si une période de temps après le démarrage de l'automobile est inférieure à un premier seuil de période de temps ;
déterminer (5B) si la température ambiante est supérieure à une limite maximale de la température du siège ; et
diminuer (5C), la température du siège jusqu'à la valeur optimale de la température du siège.

13. Procédé (200) selon la revendication 9, comprenant les étapes de :
déterminer (6A) ledit ou lesdits paramètres de conduite, ledit ou lesdits paramètres de conduite incluant si une période de temps après le démarrage de l'automobile est inférieure à un premier seuil de période de temps ;
déterminer (6B) ledit ou lesdits paramètres ambiants, ledit ou lesdits paramètres ambiants incluant si la température ambiante est inférieure à une limite minimale de la température du siège ; et
augmenter (6C) la température du siège jusqu'à la valeur optimale de la température du siège.

14. Procédé (200) selon la revendication 9, comprenant les étapes de :
déterminer (7A) ledit ou lesdits paramètres de l'automobile, ledit ou lesdits paramètres de l'automobile incluant si la vitesse de l'automobile change de façon consistante sur une période de temps prédéterminée ; et
augmenter (7B) la température du siège jusqu'à la valeur optimale de la température du siège.

15. Procédé (200) selon la revendication 9, comprenant les étapes de :
déterminer (8A) ledit ou lesdits paramètres automobiles, ledit ou lesdits paramètres automobiles incluant si un état de charge de la batterie est inférieur à un seuil minimum d'état de charge de la batterie ;
déterminer (8B) si un taux de décharge de la batterie est supérieur à un taux de décharge maximum de la batterie ; et
cesser (8C) le fonctionnement du module thermoélectrique (130) pour préserver la charge d'une batterie (105).
